# EUROPEAN PATENT APPLICATION

(11) **EP 4 233 651 A1**
(43) Date of publication of application: **30.08.2023**
(21) Application number: 22158968.2
(22) Date of filing: 25.02.2022
(51) Int. Cl.: A47J 43/046, A47J 36/32

(54) **KITCHEN MACHINE, IDENTIFICATION DEVICE, FOOD-PROCESSING MODULE, AND PROCESSING DEVICE**

(71) Applicant: Suntek Industries (Hong Kong) Company Limited, Shatin, New Territories (HK)
(72) Inventor: WONG, Sing Sen Robin, Chai Wan (HK); POON, Ho Kai, Kowloon (HK)
(74) Representative: Gunzelmann, Rainer

(57) **Abstract**

Disclosed is a kitchen machine (10) that can be operated with a plurality of different food-processing modules. The kitchen machine (10) is configured to identify each of the plurality of food-processing modules. The kitchen machine (10) may comprise a first connector (30) configured to be electrically connected to a second connector of a food-processing module, a processor (20) electrically connected to the first connector (30) and configured, when the first connector (30) is electrically connected to the second connector, to initiate, during a first time interval, a sending of a plurality of first output signals via the first connector (30) to the second connector, initiate, during a second time interval after the first time interval, a receiving of a plurality of first input signals from the second connector via the first connector (30), and identify the food-processing module based on the plurality of first input signals.

## Description

The disclosure relates to a kitchen machine, an identification device, a food-processing module, and a processing device. Specifically, the disclosure relates to a kitchen machine that can be operated with a plurality of different food-processing modules and that is configured to identify each of the plurality of different food-processing modules.

Depending on the type of food processing, kitchen machines have different operation requirements. For example, depending on the type of food processing, a kitchen machine may be required to operate in a high speed mode, a high heat mode, or a high torque mode. For applying different food-processing modes in one kitchen machine, it is preferable that the kitchen machine can be operated with different food-processing modules, each being optimized for a specific food-processing operation. For example, the food-processing modules may include a food-processing module that is optimized for high-heat cooking with varying temperature curves, a food-processing module that is optimized for chopping with blades that are rotated at a high speed, a food-processing module that is optimized for a high-torque mincing operation, or a breadmaker food-processing module which is designed to work at low speed and high torque.

For each of the food-processing modules, it is necessary that the kitchen machine carefully controls its specific functions. For example, if a breadmaker food-processing module designed to work at low speed and high torque is attached to the kitchen machine, operating the motor of the kitchen machine at high speed may destroy the module and damage the motor. Thus, the kitchen machine has to individually control each food-processing module. For such individual control, the kitchen machine has to know which food-processing module is currently attached to the kitchen machine.

The present disclosure is directed at the object of providing a kitchen machine that can identify a food-processing module to be operated by the kitchen machine, and a food-processing module that can be identified by a kitchen machine.

This object is addressed by a kitchen machine as defined in claim 1, an identification device according to claim 10, a food-processing module as defined in claim 12, and a processing device as defined in claim 15. Further aspects of the present disclosure are defined in the dependent claims.

The kitchen machine is configured to be operated with and identify a food-processing module, and comprises a processor configured to receive a food-processing module identification signal from the food-processing module, from a mobile device configured to communicate with the food-processing module, or from a server configured to communicate with the food-processing module.

The kitchen machine may be any kind of food-processing machine that can be used for processing food and to which at least one food-processing module can be connected. The food-processing module may, for example, be a cooking pot with a stirrer. For the connection, the kitchen machine may comprise a holder into which the food-processing module may be placed and which is configured to hold the food-processing module in a stable manner.

The identification of the food-processing module may be carried out in the kitchen machine, the food-processing module, the mobile device, or the server. Thus, in terms of identification of the food-processing module, the kitchen machine may be a passive device or an active device.

The identification signal may be received wirelessly (e.g., via Bluetooth or via a Wireless Local Area Network, WLAN) or in a hard-wired manner (e.g., by means of a plug and a socket) from the food-processing module, the mobile device, or the server.

The identification signal may comprise a signature that uniquely identifies the food-processing module, and/or signals, based on which the food-processing module may be identified. For example, the identification signal may comprise unique patterns of time-series data. The identification signal may comprise additional data, like the production date of the food-processing module, the location of the food-processing module, or the sales location of the food-processing module.

In a preferred embodiment, the kitchen machine comprises a first connector configured to be electrically connected to a second connector of the food-processing module, wherein the processor is electrically connected to the first connector and configured, when the first connector is electrically connected to the second connector, to initiate, during a first time interval, a sending of a plurality of first output signals via the first connector to the second connector, initiate, during a second time interval after the first time interval, a receiving of the food-processing module identification signal from the second connector via the first connector, the food-processing module identification signal comprising a plurality of first input signals, and identify the food-processing module based on the plurality of first input signals.

The first connector matches the second connector and may be any electrical connection means that allows electrical signals to be sent and received via the first and second connectors. For example, the first connector may be a socket. The first connector may comprise a plurality of poles. Preferably, the number of poles of the first connector matches the number of poles of the second connector. A pole in the sense of the present disclosure is any kind of electrical contact. If it is in the following referred to the first connector and the second connector, the disclosure always includes that one connector is realized as a plug or a socket and the other connector is realized as the other one of a plug and socket. Specifically, each of the first and second connectors may be realized as a male or a female connector. Similar, the disclosure of a pin or a plug also includes that the pin or plug may be replaced by a socket for a plug or a pin, and vice versa. The first connector and the second connector may also comprise multiple pins and sockets, pogo pins, etc.

Each of the poles of the first connector may be configured to send and a receive an electrical signal. Preferably, the first and second connectors are electrically connected when the food-processing module is connected to the kitchen machine, for example, when the food-processing module is placed in a holder of the kitchen machine.

The processor may be any control unit that is configured to send and receive or initiate sending and receiving of electrical signals. Preferably, the processor may be any control unit that is configured to send and receive or initiate sending and receiving of electrical signals via the first connector in a time-slotted manner. Specifically, the processor may be a coprocessor, and a main processor may be in charge of other functions of the kitchen machine. The signals may be binary signals representing a low state "0" and a high state "1".

Preferably, the number of first output signals matches the number of first input signals, for example, three output signals and three input signals. Each of the signals may be sent and received via at least one pole of the first connector. The processor may be an active element in view of the food-processing module generally being a passive element. The processor may be operated in an output mode and an input mode. In the output mode, signals defining a scanning code are sent in different time slots via the first connector to the second connector. In the input mode, the processor receives via the first connector from the second connector at least one scanning signal, which uniquely identifies the food-processing module. Preferably, the first time interval has the same length as the second time interval and the second time interval directly follows the first time interval. Specifically, during each food-processing module identification cycle, the processor may always send during the first time interval the same output signals via the first connector to the second connector. Depending on electrical circuitry in the food-processing module, different input signals are then received by the processor.

In case the output signals and the input signals are sent and received via a hard-wired connection in predetermined time intervals between the kitchen machine and the food-processing module, a stable and reliable identification of the food-processing module can be ensured. Specifically, since a kitchen environment often includes high temperatures, humidity and many electrical devices that are operating at high power and that generate radiation and send signals, the hard-wired connection of the present disclosure ensures that the signals can be sent and received in a time-slotted and time-synchronized manner, and that a food-processing module to be operated by the kitchen machine can be unambiguously identified.

Once the food-processing module attached to the kitchen machine is identified, the kitchen machine can precisely control the operation of the food-processing module in accordance with predetermined control requirements. For example, a heating element in a food-processing module that is optimized for high-heat cooking may be driven in accordance with varying temperature curves.

To increase the number of different food-processing modules that can be identified by the kitchen machine, the processor may be further configured to initiate, during a third time interval after the second time interval, a sending of a plurality of second output signals via the first connector to the second connector, and initiate, during a fourth time interval after the third time interval, a receiving of a plurality of second input signals from the second connector via the first connector. Preferably, each of the third time interval and the fourth time interval has the same length as the first time interval and the second time interval. Further preferably, the third time interval directly follows the second time interval and the fourth time interval directly follows the third time interval.

To further increase the number of different food-processing modules that can be identified by the kitchen machine, the processor may be configured to initiate, during a fifth time interval after the fourth time interval, a sending of a plurality of third output signals via the first connector to the second connector, and initiate, during a sixth time interval after the fifth time interval, a receiving of a plurality of third input signals from the second connector via the first connector. Preferably, each of the fifth time interval and the sixth time interval has the same length as any of the first to fourth time intervals. Further preferably, the fifth time interval directly follows the fourth time interval and the sixth time interval directly follows the fifth time interval.

In one embodiment, each time interval has a length between 5ms to 50ms. Preferably, each time interval has a length between 12ms and 18ms. Further preferably, each time interval has a length of 15ms. Further preferably, the number of time intervals matches the number of poles at the first connector that are used for identifying a food-processing module.

To minimize the size of the first connector, the plurality of poles of the first connector may comprise poles for each of the output signals and the respective input signals, and a further pole for a sensor that is located in the food-processing module. Preferably, the poles for each of the output signals and the respective input signals, and the further pole are provided at a single pin or a single hole of a socket. Thus, the friction for connecting and disconnecting the first connector and the second connector can be reduced, which increases the lifetime of the connectors. In case the first connector is connected to the second connector when the food-processing modules is being attached to the kitchen module, the attaching of the food-processing modules to the kitchen module can as well be facilitated. For example, the sensor may be a temperature sensor requiring two pins and one of the two pins is the further pole explained above.

In order to obtain stable sensor signals from the food-processing module, the processor may further be configured to short, during receipt of sensor signals via the second connector and the first connector from the sensor, all poles. For this, the processor may be operated in a high-impedance mode. In case the sensor signals are signals from a temperature sensor, for example, Negative Temperature Coefficient (NTC) sensor signals, the high-impedance mode can help to avoid side effects and/or interference to be added to NTC measurement signals. As an example, three poles P1, P2 and P3 for the scanning signals identifying the food-processing module, and one pole and a separate pin for an NTC voltage may be shorted together in order obtain stable temperature measurement signals.

To reduce the size of the first connector and the friction force for connecting and disconnecting the first connector and the second connector, the first connector may comprise a Tip Ring Sleeve, TRS, or a Tip Ring Ring Sleeve, TRRS, connector, or a socket for a TRS or TRRS. For example, a TRS connector or socket may comprise three poles P1, P2 and P3 for the scanning signals identifying the food-processing module. In another example, a TRRS connector or socket may comprise three poles P1, P2 and P3 for the scanning signals identifying the food-processing module and one pole for a sensor signal. By combining poles for different purposes in one connector or pin, it is further possible to reduce the friction force when connecting and disconnecting the first and second connectors, which facilitates the connecting and disconnecting, and increases the lifespan of both connectors.

To provide a stable signal environment, the processor may be configured to selectively add, during one of the time intervals, to each of the plurality of poles of the first connector a pull-up resistor. The pull-up resistor may be added to each pole in order to generate high-state conditions, i.e., ensure known states of the signals that have been applied. Specifically, the pull-up resistors may not be physical components, but may be added under the control of the processor for different measurement purposes.

The processor may further be configured to initiate the identification of the food-processing module when at least one of the following conditions is being met: the kitchen machine is powered up, the food-processing module is connected to the kitchen machine, and a user of the kitchen machine starts a user interface of the kitchen machine. For this, the processor may be configured to determine or be informed when the kitchen machine is powered up, the food-processing module is connected to the kitchen machine, and/or a user of the kitchen machine starts a user interface of the kitchen machine. When none of the conditions that the food-processing module is connected to the kitchen machine or a user of the kitchen machine starts a user interface of the kitchen machine is met, the processor may not spend any processing power on the identification of the food-processing module, which helps to save processing power. Thus, the processor may be configured to only initiate the identification of the food-processing module when at least one of the afore-mentioned conditions is met.

According to another aspect of the present disclosure, the first connector comprises two pins separate from the plurality of poles for supplying power to a heating element in the food-processing module. Since the current for the heating element may be high, for safety reasons, the two pins for supplying power to the heating element may be provided separate from the plurality of poles for the output and input signals and the pole for the sensor signal. Furthermore, one earth pin may be provided in the first connector. To provide further safety, i.e., distance between the pins, the earth pin may be located between two pins for the heating element and two pins for the NTC sensor and the scanning signals.

The kitchen machine may further comprise a communication module configured to receive the identification signal from the food-processing module, from the mobile device, or from the server, and forward the received identification signal to the processor in the kitchen machine. The communication module may be any kind of communication means that enables a communication, wireless or hard-wired, between the processor in the kitchen machine and a respective communication module in the food-processing module, the mobile device, or the server. For example, the communication module may be a Bluetooth- or WLAN-module.

The present disclosure further concerns an identification device for identifying a food-processing module, wherein the identification device is configured to output an identification signal to a kitchen machine, to a mobile device configured to communicate with the kitchen machine, or to a server configured to communicate with the kitchen machine. Specifically, the identification device may be any kind of hardware unit that is configured to output a signal that identifies the food-processing module to the kitchen machine, to the mobile device, or to the server, or a signal that enables the kitchen machine, the mobile device, or the server to identify the food-processing module. The identification device may be configured to be mounted in a food-processing module.

The identification device may comprise or be a processor configured to output an identification signal for identifying a food-processing module. Specifically, the processor may be configured to output a signal that uniquely identifies or enables to uniquely identify a food-processing module. The identification device may comprise a communication module that sends the signal output from the processor to a kitchen machine, to a mobile device configured to communicate with the kitchen machine, or to a server configured to communicate with the kitchen machine. The communication module may, for example, be a Bluetooth- or WLAN-module.

The identification device may also comprise or be electrical circuitry for identifying the food-processing module. The electrical circuitry may comprises at least one or any combination of the following: a shorted first pole of a plurality of poles, a shorted second pole of the plurality of poles, a shorted third pole of the plurality of poles, an electrical connection of two of the plurality of poles with a Schottky diode in a first forward direction, a connection of two of the plurality of poles with a Schottky diode in a second forward direction opposite the first forward direction, a connection of a first pole and a second pole of the plurality of poles with a resistor, a connection of a second pole and a third pole of the plurality of poles with a resistor, a connection of two of the plurality of poles with a transistor, and no electrical connection between two of the plurality of poles.

The present disclosure further concerns a food-processing module comprising an identification device. The food-processing module may be any module capable of processing food that can be operated by a kitchen machine.

The food-processing module may further comprise a second connector configured to be electrically connected to a first connector of a kitchen machine, wherein the electrical circuitry of the identification device is connected to the second connector and configured to output the identification signal via the second connector to the first connector when being applied with input signals from the first connector via the second connector. The identification signal may comprise unique output signals.

The food-processing module may be attached to the kitchen machine. The attaching of the food-processing module to the kitchen machine may cause the connection of the first connector and the second connector. For example, the food-processing module may be a food-processing module that is optimized for high-heat cooking with varying temperature curves, a food-processing module that is optimized for chopping with blades that are rotated at a high speed, a food-processing module that is optimized for a high-torque mincing operation, or a breadmaker food-processing module which is designed to operate at low speed and high torque. The attaching of the food-processing module to the kitchen machine may also enable the kitchen machine to power a processor in the food-processing module with electrical energy.

The electrical circuitry is a passive element that provides as output signals a unique signature when being applied with input signals. Specifically, when being applied with different input signals at different time intervals, the electrical circuitry is configured to provide different output signals. To save space, the electrical circuitry may be provided inside the second connector. Specifically, the electrical circuitry may be provided inside a pin or a plug of the second connector. To provide stable identification signals, the electrical circuitry may be protected from coming into contact with food items, for example, by means of an encapsulation. Moreover, the electrical circuitry may be located at a safety distance from a heating element within the food-processing module.

Preferably, the second connector comprises a plurality of poles and the electrical circuitry comprises at least one or any combination of the following: a shorted first pole of the plurality of poles, a shorted second pole of the plurality of poles, a shorted third pole of the plurality of poles, an electrical connection of two of the plurality of poles with a Schottky diode in a first forward direction, a connection of two of the plurality of poles with a Schottky diode in a second forward direction opposite the first forward direction, and no electrical connection between two of the plurality of poles. The electrical circuitry may also include three shorted poles. For example, the second connector may comprise as the plurality of poles a first pole, a second pole and a third pole, and one Schottky diode is connected between the first pole and the second pole, a connection of a first pole and a second pole of the plurality of poles with a resistor, a connection of a second pole and a third pole of the plurality of poles with a resistor, a connection of two of the plurality of poles with a transistor, and no electrical connection is provided to the third pole. In another example, one Schottky diode is reverse-connected between the first pole and the second pole, and no electrical connection is provided to the third pole. In still another example, one Schottky diode is connected between the first pole and the second pole, and one Schottky diode is connected between the first pole and the third pole. Preferably, the structure of the second connector with its poles and pins matches the structure of the first connector with its poles and pins.

In a preferred embodiment, the second connector comprises or is a plug or a pin, and the electrical circuitry is included in the plug or pin, wherein the plug or pin includes the plurality of poles for receiving the output signals from the first connector and sending the input signals to the first connector.

The food-processing module may further comprise a sensor, for example, an NTC sensor, the second connector may comprise a plurality of poles and the plurality of poles may comprise poles for each of the input signals and the respective output signals, and a further pole for the sensor. To save space, the second connector may comprise a Tip Ring Sleeve, TRS, or a Tip Ring Ring Sleeve, TRRS, connector, or a socket for a TRS or TRRS.

The food-processing module may also comprise a heating element, and the second connector may comprise two pins for supplying power to the heating element. Since the current for the heating element may be high, for safety reasons, the two pins for supplying power to the heating element may be provided separate from the plurality of poles for the output and input signals and the pole for the sensor signal of the second connector. The heating element may be a heating plate and an NTC sensor may be mounted on the heating plate. The food-processing module may comprise additional elements and/or sensors that can be used for food-processing, like blades that are rotated by a motor in the kitchen machine or a humidity sensor.

The present disclosure further concerns a processing device. The processing device may be a mobile device or a server. The processing device is configured to receive an input signal from a food-processing module or a kitchen machine, process the input signal in order to identify the food-processing module, and send an identification signal to the kitchen machine. In this case, the intelligence for identifying the food-processing module lies in the mobile device or the server. The input signal and the identification signal may be sent wirelessly, for example, by means of respective communication modules, or in a hard-wired manner.

Another aspect of the present disclosure concerns a kitchen machine comprising any of the aforementioned food-processing modules.

The foregoing summary, as well as the following detailed description of the embodiments, will be better understood when read in conjunction with the drawings. It will be understood that the invention is not limited to the specific embodiments disclosed, and reference is made to the claims for that purpose. In the drawings:
- Fig. 1: schematically shows an embodiment of a kitchen machine,
- Fig. 2: schematically shows an embodiment of a first food-processing module,
- Fig. 3: schematically shows an embodiment of a second food-processing module,
- Fig. 4: schematically shows an embodiment of a first connector,
- Fig. 5: schematically shows an embodiment of pin explaining a basic structure of an electrical circuitry for uniquely identifying a food-processing module,
- Figs. 6 to 8: schematically shows an embodiment generally explaining the output and input signals of a processor in a kitchen machine,
- Figs. 9 to 11: schematically show a first embodiment of electrical circuitry that uniquely identifies a food-processing module when being applied with a plurality of input signals in different time intervals,
- Figs. 12 to 14: schematically show a second embodiment of electrical circuitry that uniquely identifies a food-processing module when being applied with a plurality of input signals in different time intervals,
- Figs. 15 to 17: schematically show a third embodiment of electrical circuitry that uniquely identifies a food-processing module when being applied with a plurality of input signals in different time intervals,
- Figs. 18 to 20: schematically show a fourth embodiment of electrical circuitry that uniquely identifies a food-processing module when being applied with a plurality of input signals in different time intervals,
- Figs. 21 to 23: schematically show a fifth embodiment of electrical circuitry that uniquely identifies a food-processing module when being applied with a plurality of input signals in different time intervals,
- Fig. 24: shows how up to 29 food-processing modules may be identified with electrical circuitry having three poles,
- Figs. 25: schematically shows an embodiment of a 4-pole TRRS pin,
- Fig. 26: schematically shows a second embodiment of a kitchen machine with a food-processing module,
- Fig. 27: schematically shows a third embodiment of a kitchen machine with a food-processing module,
- Fig. 28: schematically shows a fourth embodiment of a kitchen machine with a food-processing module,
- Fig. 29: schematically shows a fifth embodiment of a kitchen machine with a food-processing module, and
- Fig. 30: schematically shows a sixth embodiment of a kitchen machine with a food-processing module.

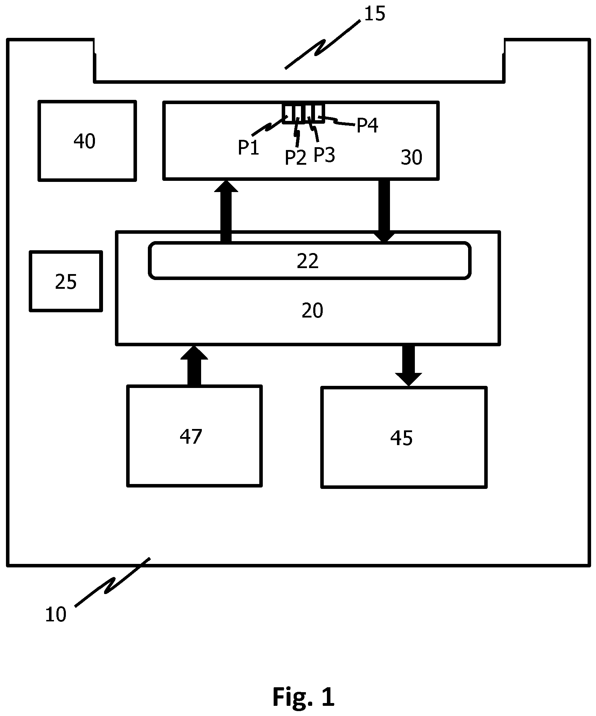

Fig. 1 schematically shows an embodiment of a kitchen machine 10. The kitchen machine 10 comprises a holder 15, a processor 20 with a scanning port 22, a memory 25 for storing control information, a first connector 30 having a plurality of poles P1, P2, P3 and P4, an electrical motor 40 for driving mechanical elements in a food-processing module, a display unit 45 and a user input unit 47. The kitchen machine 10 may comprise further mechanical and electrical components that are not illustrated in Fig. 1, but which are known to be included in kitchen machines depending on the food processing purpose. The kitchen machine 10 acts as a base machine that is configured to be operated with a plurality of different food-processing modules. For this, one of the plurality of different food-processing modules may be placed in the holder 15.

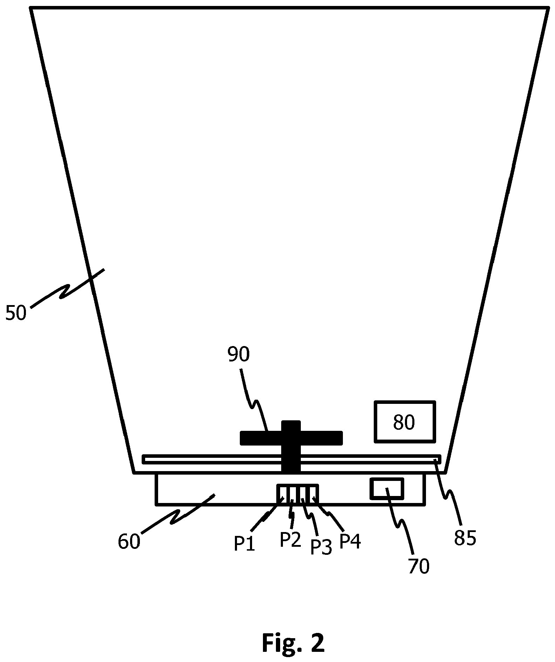

Fig. 2 schematically illustrates an embodiment of a first food-processing module 50 that may be placed into the holder 15 and operated by the kitchen machine 10 shown in Fig. 1. The first food-processing module 50 comprises a second connector 60 having a plurality of poles P1, P2, P3 and P4. The second connector 60 matches the first connector 30 of the kitchen machine 10. The first food-processing module 50 further comprises an electrical circuitry 70 configured to uniquely identify the first food-processing module 50 when being applied with input signals from the processor 20 via the scanning port 22 of the kitchen machine 10, an NTC sensor 80, a heating plate 85, and a stirrer 90.

When the first food-processing module 50 shown in Fig. 2 is placed in the holder 15 of the kitchen machine 10 shown in Fig. 1, the first connector 30 of the kitchen machine 10 and the second connector 60 of the first food-processing module 50 are mechanically and electrically connected. In response to this connection, the processor 20 sends, during a first time interval, a plurality of first output signals from its scanning port 22 to the first connector 30. The output signals are further sent from the first connector 30 to the second connector 60. The second connector 60 is electrically connected to the electrical circuitry 70. For example, the electrical circuitry 70 may be included in a pin of the second connector 60 (not shown in Fig. 2).

Thus, after passing the electrical circuitry 70, during a second time interval after the first time interval, a plurality of first input signals are received by the scanning port 22 of the processor 20 from the second connector 60 via the first connector 30. By means of the plurality of received first input signals, the processor 20 can identify the first food-processing module 50, i.e., the processor 20 can determine which food-processing module is placed in the holder 15. Based on the identified first food-processing module 50, temperature measurements by the NTC sensor 80, and user input (for example, be means of the rotatable knob 47), the processor 20 controls the rotation speed and the rotation direction of the motor 40, and the temperature of the heating plate 85. When the first food-processing module 50 is placed in the holder 15, the motor 40 is mechanically connected to the stirrer 90 by means of a shaft (not shown in in the figures) so that the motor 40 can drive the stirrer 90.

The memory 25 in the kitchen machine 10 stores control information for each of the plurality of food-processing modules that may work with the kitchen machine 10. Once the processor 20 has identified which food-processing module is placed in the holder 15, the processor 20 receives respective control information for the attached food-processing module from the memory 25 and controls the controllable elements of the food-processing module in accordance with the received control information. Preferably, the memory 25 is a read and write memory so that in the course of a software update, additional control information for new food-processing modules or improved control information may be uploaded to the memory 25 and used by the processor 20.

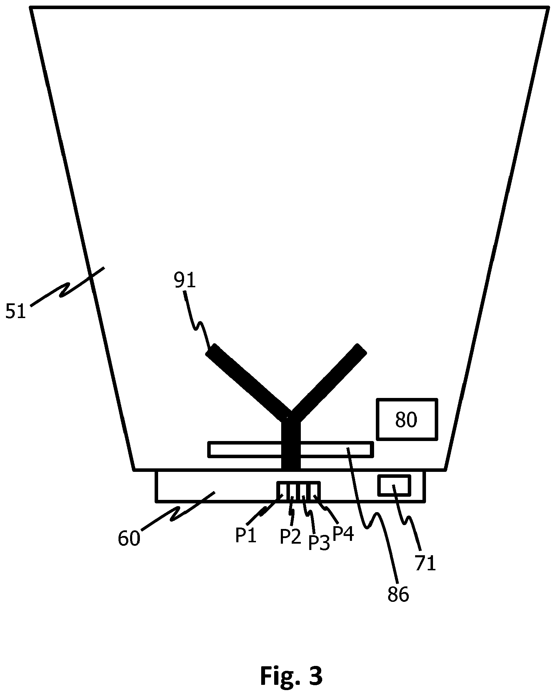

Fig. 3 schematically shows an embodiment of a second food-processing module 51. Similar to the first food-processing module 50 shown in Fig. 2, the second food-processing module 51 may be placed in the holder 15 of the kitchen machine 10 shown in Fig. 1. Also similar to the first food-processing module 50 shown in Fig. 2, the second food-processing module 51 comprises a second connector 60 that is mechanically and electrically connected to the first connector 30 of the kitchen machine 10 when the second food-processing module 51 is placed in the holder 15 of the kitchen machine 10. The second food-processing module 51 also comprises an NTC sensor 80. However, the second food-processing module 51 differs from the first food-processing module 50 by the electrical circuitry 71, which is configured to uniquely identify the second food-processing module 51 when being applied with input signals from the processor 20. Moreover, the second food-processing module 51 comprises a different stirrer 91 and a different heating plate 86.

When the second food-processing module 51 is placed in the holder 15 of the kitchen machine 10, the first connector 30 of the kitchen machine 10 and the second connector 60 of the first food-processing module 51 are mechanically and electrically connected. In response to this connection, the processor 20 sends, during a first time interval, a plurality of first output signals from its scanning port 22 to the first connector 30. The output signals are further sent from the first connector 30 to the second connector 60. Independent of which food-processing module is placed in the holder 15, the same output signals are always sent in output time intervals during an identification cycle to the food-processing module. The second connector 60 is electrically connected to the electrical circuitry 71. Thus, after passing the electrical circuitry 71, during a second time interval after the first time interval, a plurality of first input signals are received by the scanning port 22 of the processor 20 from the second connector 60 via the first connector 30. Based on the plurality of received first input signals, the processor 20 identifies the second food-processing module 51.

Thereafter, the processor 20 obtains the control information for the second food-processing module 51 from the memory 25. Based on the received control information and the temperature measurements by the NTC sensor 80, the processor 20 controls the rotation speed and the rotation direction of the motor 40, which drives the stirrer 91, and controls the temperature of the heating plate 86. Specifically, since the processor 20 has identified that the second food-processing module 51, which is different from the first food-processing module 50, has been placed in the holder 15, the stirrer 91 and the heating plate 86 are driven based on the received control information comprising different control parameters over time as compared to the stirrer 90 and the heating plate 85 of the first food-processing module 50.

In the above explained embodiments, the identification of the food-processing module 50, 51 that is placed in the holder 15 starts when the first food-processing module 50 or the second food-processing module 51 is placed in the holder 15. However, the identification of the first food-processing module 50 or the second food-processing module 51 may also start when the kitchen machine 10 is powered up or when a user of the kitchen machine 10 starts a user interface of the kitchen machine 10, for example, the display unit 45 being configured as a touch-sensitive display and/or the user input unit 47 being configured as a rotatable knob.

It should be noted that the first food-processing module 50 shown in Fig. 2 and the second food-processing module 51 shown in Fig. 3 are only exemplary embodiments. Other food-processing modules may comprise different elements, for example, a humidity sensor or a water bath. Moreover, a food-processing module does not necessarily need a stirrer, blades, or a temperature sensor. Thus, it is also possible that the kitchen machine 10 does not comprise a motor 40 that mechanically drives an element in the food-processing module. In this case, only electrical signals are exchanged between the kitchen machine 10 and the food-processing module 50 or 51.

According to another embodiment not shown in the figures, the kitchen machine may be configured to be operated with more than one food-processing module at the same time. For this, the kitchen machine may comprise more than one holder, each having a first connector electrically connected to the processor.

For identifying a food-processing module that is connected to the kitchen machine 10, the first connector 30 and the processor of the kitchen machine 10 may operate in an output mode and an input mode. In the output mode, the poles P1, P2 and P3 of the first connector 30 are configured as outputs and a unique scanning code is sent in different time output intervals to the food-processing module 50, 51 connected to the kitchen machine 10. In the input mode, the poles P1, P2 and P3 of the first connector 30 are configured as inputs and the processor 20 receives unique scanning signals in different input time intervals, based on which the processor 20 can identify the food-processing module 50, 51 being placed in the holder 15.

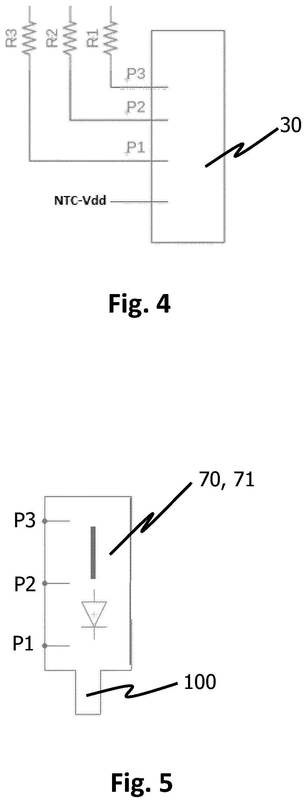

Fig. 4 schematically shows an embodiment of a first connector. The first connector may be the first connector 30 shown in the kitchen machine 10 of Fig. 1 or may be a first connector included in another kitchen machine. The first connector 30 comprises three poles P1, P2 and P3 for identifying a food-processing module, and a further pole for an NTC voltage NTC-Vdd. Another pin or pole for the NTC voltage and an earth pin may additionally be included in the first connector 30 (not shown in Fig. 4).

All poles are connected to a processor, for example, the processor 20 included in the kitchen machine 10 shown in Fig. 1. Additionally, each of the three poles P1, P2 and P3 is connected in series to a respective pull-up resistor R1, R2 and R3 in order to generate high-state conditions, i.e., ensure known states of the signals that are applied to the poles P1, P2 and P3. The pull-up resistors R1, R2 and R3 may be no physical components, and may be selectively added under the control of the processor 20 for different measurement purposes. Fig. 5 schematically shows an embodiment of a pin 100 explaining a basic structure of an electrical circuitry 70, 71 for uniquely identifying a food-processing module. The pin 100 may be included in the second connector 60 shown in Figs. 2 or 3. The electrical circuitry 70, 71 may be the electrical circuitry 70 included in the food-processing module 50 shown in Fig. 2, the electrical circuitry 71 included in the food-processing module 51 shown in Fig. 3, or electrical circuitry included in another food-processing module. Fig. 5 specifically shows which electrical components may be included in an electrical circuitry 70, 71 inside a pin 100 having three poles P1, P2 and P3 for uniquely identifying a food-processing module.

As can be seen from Fig. 5, the three poles P1, P2 and P3 or two of the three poles P1, P2 and P3 may not be electrically connected at all. Moreover, two of the three poles P1, P2 and P3 may be connected by means of a short circuit, may be connected by a Schottky diode in a first forward direction, or may be connected by a Schottky diode in a second forward the direction opposite the first forward direction. The same may apply for the other two of the three poles P1, P2 and P3, e.g., two Schottky diodes may be used. Moreover, all three poles P1, P2 and P3 may shorted together. A connection of the first pole P1 and the second pole P2 with a resistor, and/or a connection of the second pole P2 and the third pole P3 with a resistor may also be possible. Moreover, a connection of two of the three poles P1, P2, P3 with a transistor may be foreseen. Furthermore, in the embodiments with the Schottky diode(s), the Schottky diode(s) may be replaced by transistors. It will be understood by those skilled in the art that the number of three poles P1, P2 and P3 is not limiting for the present disclosure, i.e., the pin 100 may comprise more or less poles.

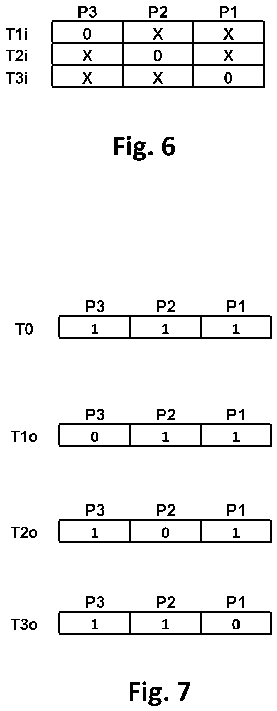

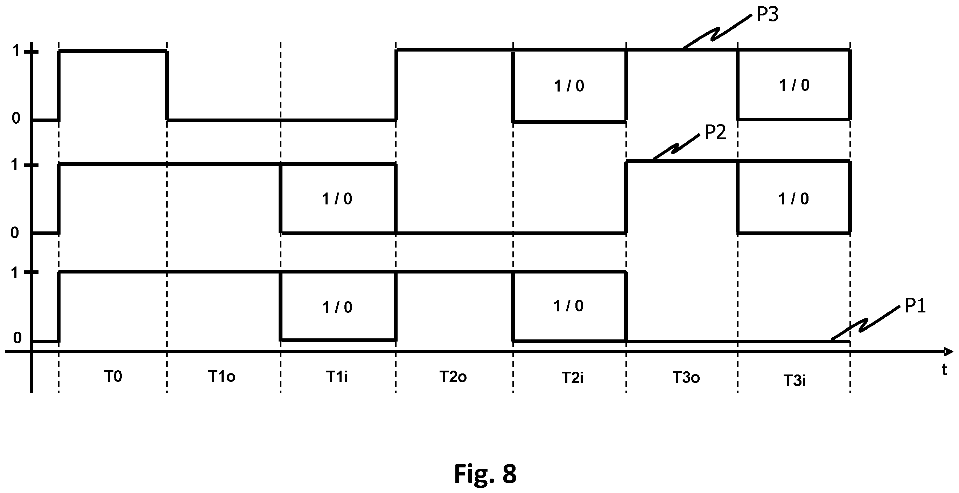

Figs. 6 to 8 schematically show an embodiment generally explaining the output and input signals of a processor in a kitchen machine. The processor may be the processor 20 included in the kitchen machine 10 shown in Fig. 1. The output signals may be the signals that are applied to the electrical circuitry 70 shown in Fig. 2, that are applied to the electrical circuitry 71 shown in Fig. 3, or that are applied to any other electrical circuitry in a food-processing module that may operate with the kitchen machine 10. The input signals may be the signals that are received from the electrical circuitry 70 shown in Fig. 2, that are received from the electrical circuitry 71 shown in Fig. 3, or that are received from any other electrical circuitry in a food-processing module that may operate with the kitchen machine 10. The first connector 30 comprises three poles P1, P2 and P3, and the signals for identifying the food-processing module are sent and received in three time intervals T1, T2 and T3. As can be seen from Fig. 8, the time intervals T1, T2 and T3 are subdivided into output "o" and input "i" time intervals T1o, T1i, T2o, T2i, T3o and T3i. Additionally, there is a time interval T0 for starting a process of identifying a food-processing module.

Fig. 6 shows an input matrix of binary input signals that are received by the processor 20 via the three poles P1, P2 and P3 in the first connector 30 during input time intervals T1i, T2i and T3i. The input matrix includes items indicated with the value "X", which may be either "0" or "1" depending on the configuration of the electrical circuitry in the food-processing module.

Fig. 7 shows respective output values of binary signals that are sent by the processor 20 via the first connector 30 to the food-processing module in respective output time intervals T0, T1o, T2o and T3o. As can be seen from Fig. 7, the scanning starts with all poles P1, P2 and P3 being in the high state "1" during time interval T0. Thereafter, in each of time intervals T1o, T2o and T3o, the state at one of poles P1, P2 and P3 is changed. Thus, there are three time intervals for three poles.

Fig. 8 shows the binary input and output values over time t along the horizontal axis. The identification of the food-processing module by the processor 20 starts with an initialization time interval T0. Thereafter, there are three subsequent time intervals T1, T2 and T3, each of which is subdivided as output "o" and input "i" time intervals T1o, T1i, T2o, T2i, T3o and T3i. Thus, during each of time intervals T1, T2 and the T3, the poles P1, P2 and P3 will change from output (scanning period) to input (reading period). During the input time intervals, the state will change according to the configuration of the electrical circuitry in the food-processing module connected to the kitchen machine.

Each pole is initially pulled-up with a pull-up resistor R1, R2, and R3 (see Fig. 4) to a high-state or value "1". Thus, in the initial state of time interval T0, the three poles P1, P2 and P3 are "1". In this exemplary embodiment, during the output time interval T1o, the value "1" is applied to pole P1, the value "1" is applied to pole P2, and the value "0" is applied to pole P3. Accordingly, depending on the configuration of the electrical circuitry in the food-processing module, during the input time interval T1i, a value "1" or "0" may be read at pole P1 and a value "1" or "0" may be read at pole P2. At pole P3, the value "0" is read during the input time interval T1i.

Thereafter, during the output time interval T2o, the value "1" is applied to pole P1, the value "0" is applied to pole P2, and the value "1" is applied to pole P3. Depending on the configuration of the electrical circuitry in the food-processing module, during the input time interval T2i, a value "1" or "0" may be read at pole P1 and a value "1" or "0" may be read at pole P3. At pole P2, the value "0" is read during the input time interval T2i. Thereafter, during the output time interval T3o, the value "0" is applied to pole P1, the value "1" is applied to pole P2, and the value "1" is applied to pole P3. Depending on the configuration of the electrical circuitry in the food-processing module, during the input time interval T3i, a value "1" or "0" may be read at pole P2 and a value "1" or "0" may be read at pole P3. At pole P1, the value "0" is read during the input time interval T3i.

Accordingly, based on the input signals received during input time intervals T1i, T2i and T3i, the electrical circuitry in the food-processing module, and thus, the food-processing module may be uniquely identified by the processor 20 in the kitchen module 10. Specifically, for identifying a food-processing module, the same output signals may always be applied during the output time intervals by the processor, however, different input signals are received during the input time intervals depending on the electrical circuitry installed in the food-processing module.

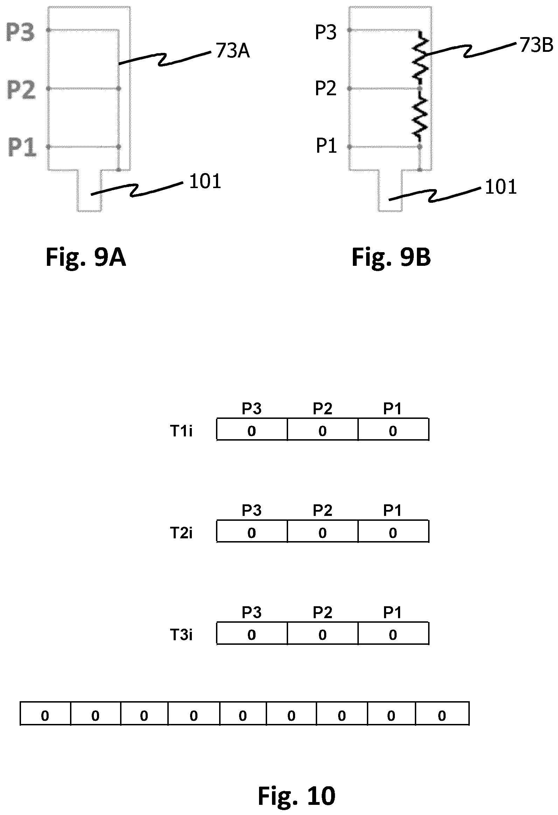

Figs. 9 to 11 schematically show a first embodiment of electrical circuitry that uniquely identifies a food-processing module when being applied with a plurality of input signals in different time intervals. The electrical circuitry 73A illustrated in Fig. 9A is included in a pin 101 having three poles P1, P2 and P3. The pin 101 may be included in the second connector 60 shown in Figs. 2 or 3, or in a second connector 60 of another food-processing module. Pin 101 is a metal pin. By means of the electrical circuitry 73A, the three poles P1, P2 and P3 of pin 101 are shorted together. An alternative electrical circuitry 73B with two resistors instead of the shorted connections of poles P1, P2 and P3 is shown in Fig. 9B.

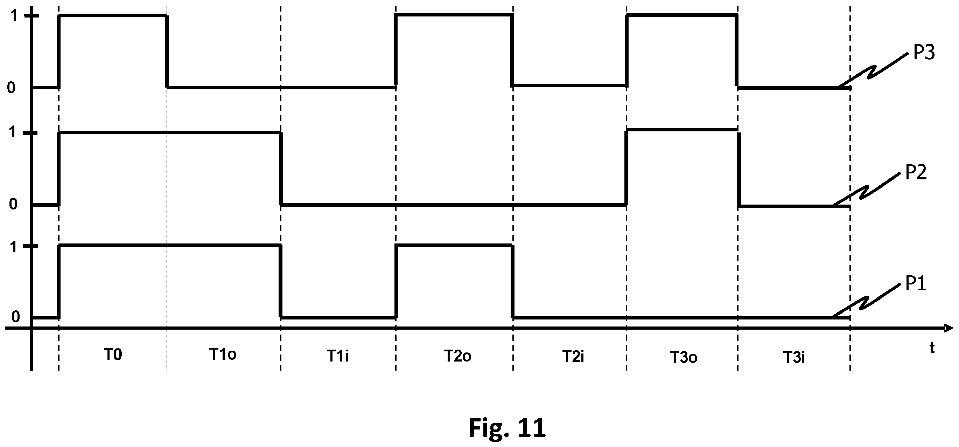

Figs. 10 and 11 illustrate the input signals that are received by the processor 20 when the electrical circuitry 73A shown in Fig. 9A is applied with the output signals shown in Fig. 7. In particular, Fig. 10 shows the output signals received at poles P1, P2 and P3 during time intervals T1i, T2i and T3i. The last line of Fig. 10 shows the data string received by processor 20.

As can be seen from Fig. 11, the identification cycle starts with time interval T0 where all poles P1, P2 and P3 are at a high-state "1". Thereafter, in reading time interval T1i, poles P1 and P2 change to "0". Thereafter, in reading time interval T2i, poles P1 and P3 change to "0". Finally, in reading time interval T3i, poles P2 and P3 change to "0". Based on the received data, processor 20 can identify the electrical circuitry 73A.

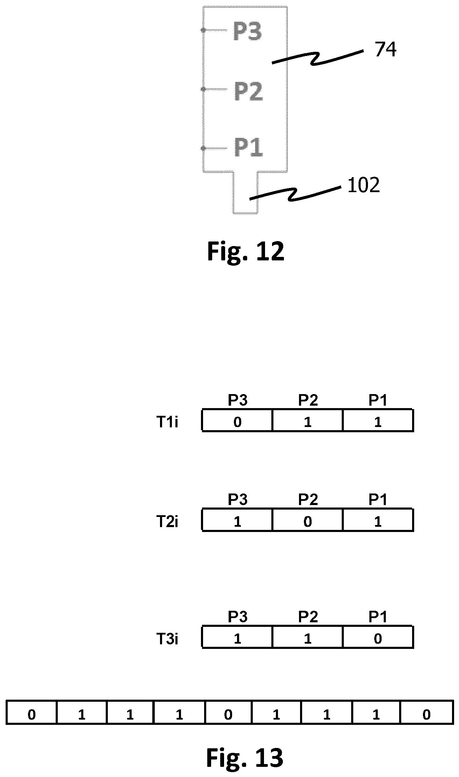

Figs. 12 to 14 schematically show a second embodiment of electrical circuitry that uniquely identifies a food-processing module when being applied with a plurality of input signals in different time intervals. The electrical circuitry 74 illustrated in Fig. 12 is included in a pin 102 having three poles P1, P2 and P3. The pin 102 may be included in the second connector 60 shown in Figs. 2 or 3, or in a second connector 60 of another food-processing module. Pin 102 is a metal pin. In pin 102, the electrical circuitry 74 is configured such that none of the three poles P1, P2 and P3 is electrically connected to another pole.

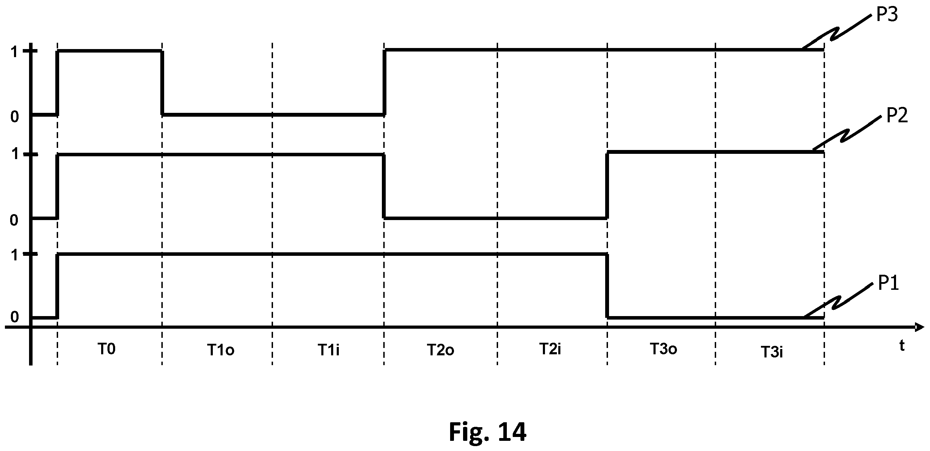

Figs. 13 and 14 illustrate the input signals that are received by the processor 20 when the electrical circuitry 74 shown in Fig. 12 is applied with the output signals shown in Fig. 7. In particular, Fig. 13 shows the output signals received at poles P1, P2 and P3 during time intervals T1i, T2i and T3i. The last line of Fig. 13 shows the data string received by processor 20.

As can be seen from Fig. 14, since no electrical connection is provided between poles P1, P2 and P3, the low state "0" does not affect the states in the reading time intervals. Specifically, after the initialization time interval T0, in reading interval T1i, pole P1 remains at "1", pole P2 remains at "1" and pole P3 remains at "0". Moreover, in reading interval T2i, pole P1 remains at "1", pole P2 remains at "0" and pole P3 remains at "1". Finally, in reading interval T3i, pole P1 remains at "0", pole P2 remains at "1" and pole P3 remains at "1". Thus, processor 20 can identify electrical circuitry 74.

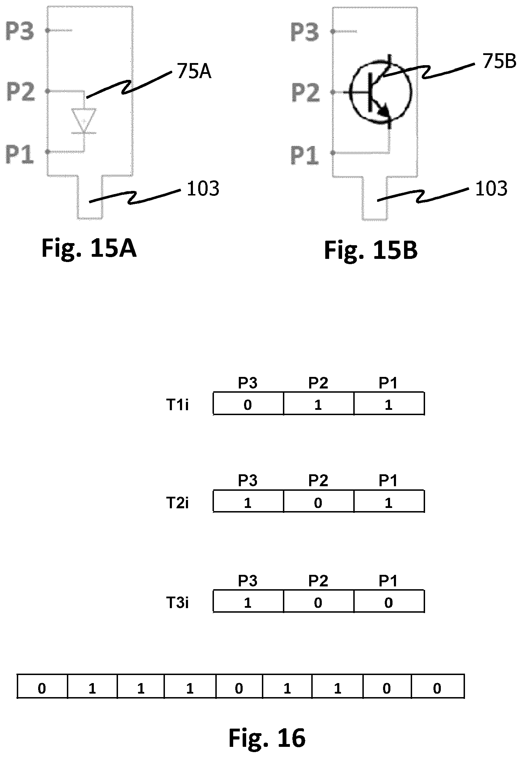

Figs. 15 to 17 schematically show a third embodiment of electrical circuitry that uniquely identifies a food-processing module when being applied with a plurality of input signals in different time intervals. The electrical circuitry 75A illustrated in Fig. 15A is included in a pin 103 having three poles P1, P2 and P3. The pin 103 may be included in the second connector 60 shown in Figs. 2 or 3, or in a second connector 60 of another food-processing module. Pin 103 is a metal pin. In pin 103, the electrical circuitry 75A only comprises one Schottky diode between poles P1 and P2, i.e., the "high" goes to "low" from pole P2 to pole P1, but not from pole P1 to pole P2. An alternative electrical circuitry 75B with a transistor instead of a Schottky diode is shown in Fig. 15B. As can be seen from Fig. 15B, the base of the npn bipolar transistor is connected with pole P2 of pin 103, the emitter is connected with pole P1 of pin 103, and the collector is not connected with any pole of pin 103.

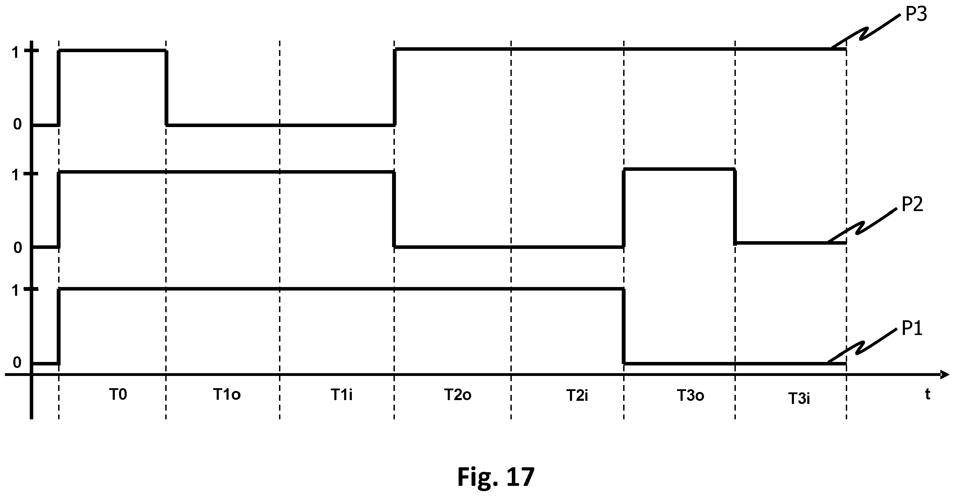

Figs. 16 and 17 illustrate the input signals that are received by the processor 20 when the electrical circuitry 75A shown in Fig. 15A is applied with the output signals shown in Fig. 7. In particular, Fig. 16 shows the output signals received at poles P1, P2 and P3 during time intervals T1i, T2i and T3i. The last line of Fig. 16 shows the data string received by processor 20.

As can be seen from Fig. 17, after the initialization time interval T0, in reading time interval T1i, poles P1 and P2 have no connection to pole P3, so they will not change. Thereafter, in reading time interval T2i, pole P1 will not change because of the reversed diode direction. Finally, in reading time interval T3i, pole P2 changes to "0" because of pole P1 being "0" and the forward direction of the diode. Thus, processor 20 can identify electrical circuitry 75A.

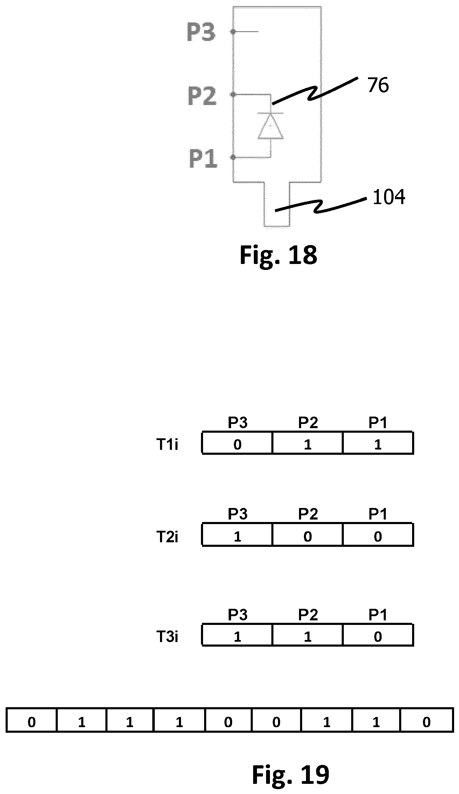

Figs. 18 to 20 schematically show a fourth embodiment of electrical circuitry that uniquely identifies a food-processing module when being applied with a plurality of input signals in different time intervals. The electrical circuitry 76 illustrated in Fig. 18 is included in a pin 104 having three poles P1, P2 and P3. The pin 104 may be included in the second connector 60 shown in Figs. 2 or 3, or in a second connector 60 of another food-processing module. Pin 104 is a metal pin. In pin 104, the electrical circuitry 76 only comprises one Schottky diode between poles P1 and P2, i.e., the "high" goes to "low" from pole P1 to pole P2, but not from pole P2 to pole P1

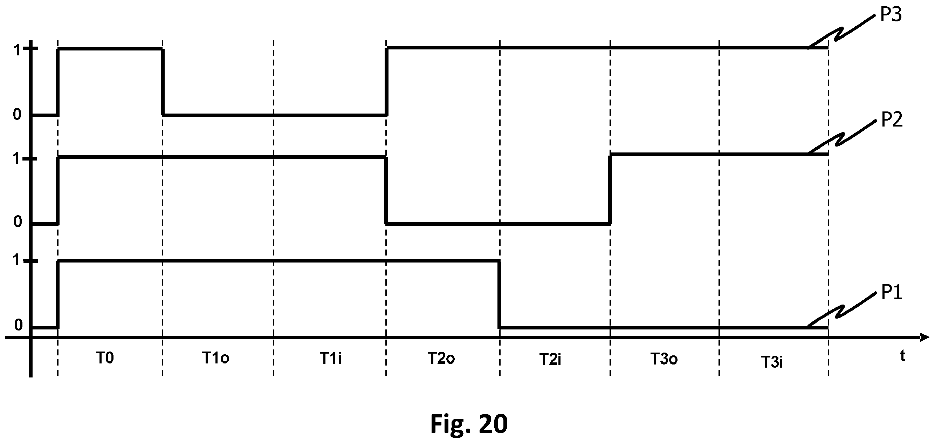

Figs. 19 and 20 illustrate the input signals that are received by the processor 20 when the electrical circuitry 76 shown in Fig. 18 is applied with the output signals shown in Fig. 7. In particular, Fig. 19 shows the output signals received at poles P1, P2 and P3 during time intervals T1i, T2i and T3i. The last line of Fig. 19 shows the data string received by processor 20.

As can be seen from Fig. 20, in reading time interval T1i, poles P1 and P2 have no connection to pole P3, so they will not change. Thereafter, in reading time interval T2i, pole P1 will change to "0" because of the diode connection to pole P2. Finally, in reading time interval T3i, pole P2 does not change because of the reversed diode direction. Thus, processor 20 can identify electrical circuitry 76.

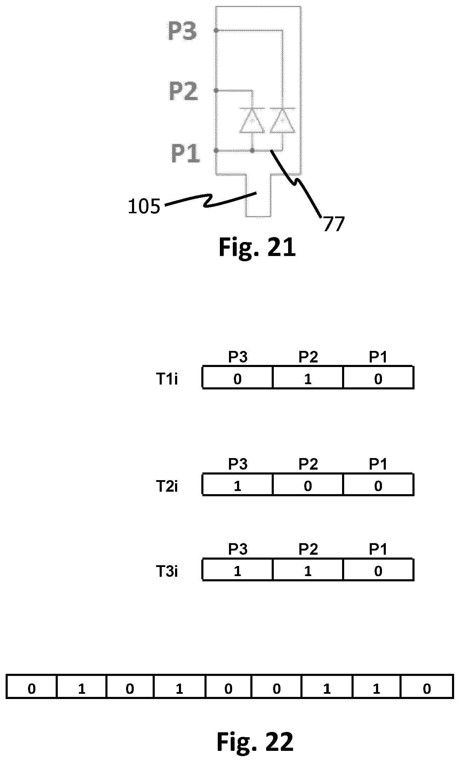

Figs. 21 to 25 schematically show a fifth embodiment of electrical circuitry that uniquely identifies a food-processing module when being applied with a plurality of input signals in different time intervals. The electrical circuitry 77 illustrated in Fig. 21 is included in a pin 105 having three poles P1, P2 and P3. The pin 105 may be included in the second connector 60 shown in Figs. 2 or 3, or in a second connector 60 of another food-processing module. Pin 105 is a metal pin. In pin 105, the electrical circuitry 77 comprises a first Schottky diode between poles P1 and P2, and a second Schottky diode between poles P1 and P3.

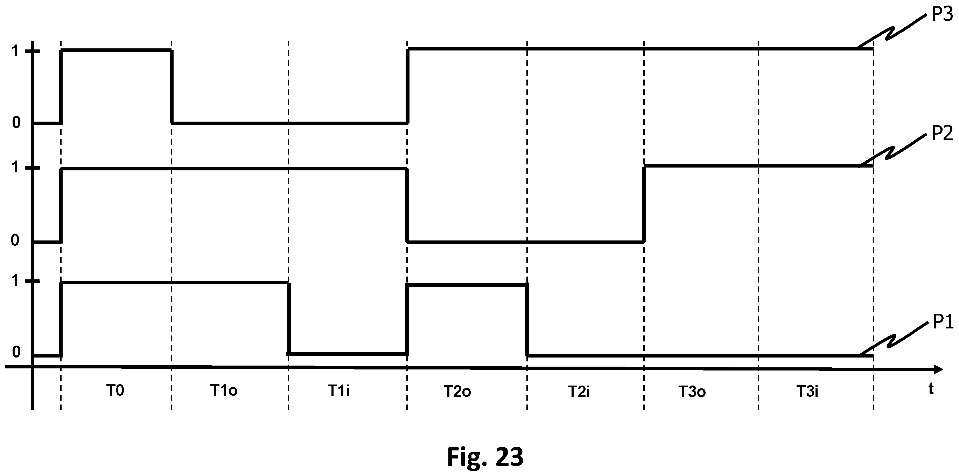

Figs. 22 and 23 illustrate the input signals that are received by the processor 20 when the electrical circuitry 77 shown in Fig. 21 is applied with the output signals shown in Fig. 7. In particular, Fig. 2 shows the output signals received at poles P1, P2 and P3 during time intervals T1i, T2i and T3i. The last line of Fig. 22 shows the data string received by processor 20.

As can be seen from Fig. 23, in reading time interval T1i, pole P1 changes to "0" because of the diode connection to pole P3. Thereafter, in reading time interval T2i, pole P1 changes to "0" because of the diode connection to pole P2. Finally, in reading time interval T3i, poles P2 and P3 do not change due to the reversed diode directions. Thus, processor 20 can identify electrical circuitry 77.

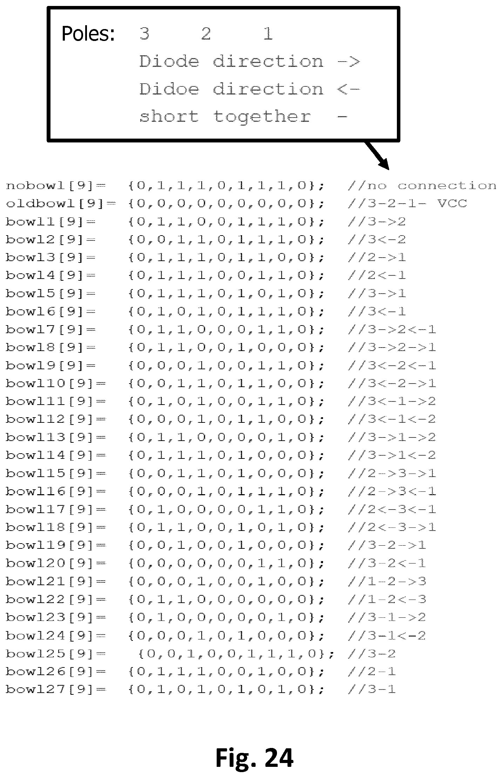

Fig. 24 shows how up to 29 food-processing modules (called "bowl" in Fig. 24) may be identified with electrical circuitry having three poles P1, P2 and P3. The left-hand column in the lower part of Fig. 24 indicates the respective food-processing modules, the middle column indicates the data strings received by processor 20, and the right-hand column illustrates the various connections explained with reference to Fig. 5 above between poles P1, P2 and P3.

Turning back to Fig. 1, in addition to the output mode and the input mode, the processor 20 and the first connector 30 of the kitchen machine 10 may operate in a high-impedance mode. The high-impedance mode is a mode in which the processor 20 and the first connector 30 are most of the time operating after the food-processing module connected to the kitchen machine has been identified. In the high-impedance mode, the poles of the first connector 30 are configured as high impedances. The high-impedance mode is useful for NTC temperature measurements, in particular for analogue-to-digital conversion (ADC) reading. For example, with reference to the embodiment of Fig. 4, all poles P1, P2 and P3 of the first connector 30 and the NTC voltage NTC-Vdd are shorted together so that it can be avoided that side effects and/or interference are added to the NTC measurement voltage.

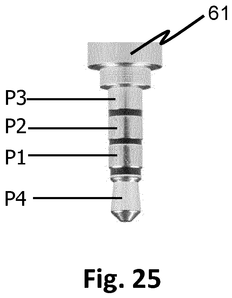

Fig. 25 schematically shows an embodiment of a 4-pole TRRS pin 61. The pin 61 may be included in the second connector 60 shown in Figs. 2 and/or 3. The pin 61 may also be any of the pins shown in Figs. 5, 9A, 9B, 12, 15A, 15B, 18 and 21.

The pin 61 comprises four poles P1, P2 and P3 that are used for the input and output signals that identify a food-processing module connected to the kitchen machine 10. Inside the pin 61, the specific electrical circuitry for identifying the food-processing module (not shown in Fig. 25) is connected to respective poles P1, P2 and P3. Pole P4 is one pole for an NTC voltage. Since the electrical circuitry is located inside the pin 61, a space-saving solution is provided. Moreover, the electrical circuitry is protected from external influences in a kitchen environment. Additional space-saving is provided by the pole P4 being provided at the pin 61 instead of using a separate pin for the NTC voltage. Moreover, saving one pin helps to facilitate connecting and disconnecting the second connector 60 and the first connector 30 due to less friction. Less friction further helps to increase the lifespan of the fist connector 30 and the second connector 60.

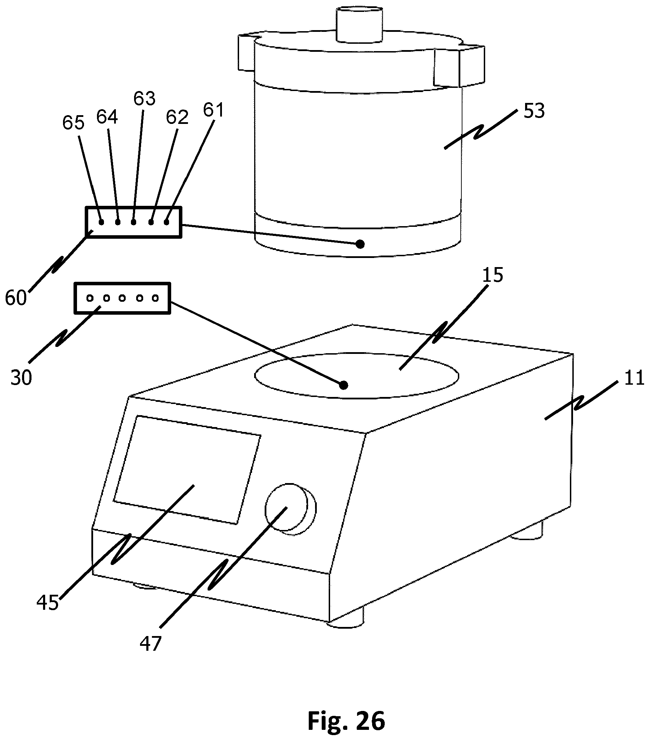

Fig. 26 schematically shows a second embodiment of a kitchen machine 11 comprising a holder 15, into which a food-processing module 53 may be placed, a first connector 30, a display unit 45, and a rotatable user-input knob 47. The kitchen machine 11 comprises further elements not shown in Fig. 26, like a processor and a memory, i.e., elements that have been explained with regard to Fig. 1. The food-processing module 53 comprises at its lower surface a second connector 60 comprising five pins 61 to 65. Food-processing module 53 comprises at a bottom plate a heating plate and an NTC sensor (not shown in Fig. 26). Pin 61 is the pin disclosed in the embodiment of Fig. 25, pin 62 is an NTC sensor pin, pin 63 is an earth pin, and pins 64 and 65 are pins that apply a supply voltage to the heater plate. Since the earth pin 63 is located between pins 61 and 62 and pins 64 and 65, a safety distance to pins 64 and 65 carrying a relatively high voltage is provided.

The first connector 30 is implemented as a socket having five socket holes that are configured to receive the pins 61 to 65 of the second connector 60 when the food-processing module 53 is placed in the holder 15. Accordingly, the first connector 30 is located at a bottom of the holder 15 (not shown in Fig. 26).

After a user of the kitchen machine 11 pushes the knob 47, the processor within the kitchen machine 11 (not shown in Fig. 26) initiates any of the identification processes explained in the above embodiments for identifying that the food-processing module 53 has been placed in the holder 15. After this identification, the display unit 45 displays a menu that corresponds to the food-processing module 53 that has been inserted in the holder 15. Accordingly, by means of the knob 47, a user of the kitchen machine 11 can select a food-processing program for the food-processing module 53. In response to the selection, the processor in the kitchen machine 11 obtains respective temperature measurements from the NTC sensor and controls the heating plate in accordance with the temperature measurements and preset temperature curves.

After the food processing with the food-processing module 53 is finished, another food-processing module may be placed in the holder 15, and the identification of the food-processing module and a specific food processing based on the identified food-processing module may start.

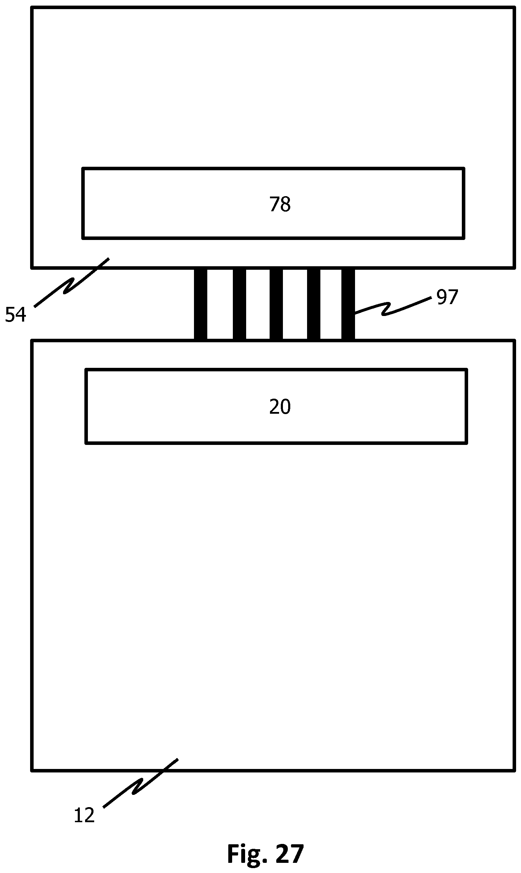

Fig. 27 schematically shows a third embodiment of a kitchen machine 12 with a food-processing module 54. The kitchen machine 12 comprises a first processor 20. The kitchen machine 12 and the first processor 20 may be the same as any of the kitchen machines or processors described in the aforementioned embodiments. The food-processing module 54 comprises a second processor 78. When the food-processing module 54 is placed into the kitchen machine 12, the connector 97 provides an electrical connection between the first processor 20 and the second processor 78. Specifically, the kitchen machine 12 powers the second processor 78 via the connector 97 with electrical energy from a power supply (not shown in Fig. 27) when the food-processing module 54 is placed into the kitchen machine 12. The connector 97 may be any of the connectors described in the aforementioned embodiments.

For identifying the food-processing module 54 when the food-processing module 54 is placed into the kitchen machine 12, after the second processor 78 is powered via the connector 97 by the kitchen machine 12, the second processor 78 sends via the connector 97 an identification signal to the first processor 20. The identification signal may comprise a signature that uniquely identifies the food-processing module 54. The identification signal may be a software ID and may comprise additional data, like the production date of the food-processing module 54, the location of the food-processing module 54, or the sales location of the food-processing module 54. Based on the identification signal, the first processor 20 identifies the food-processing module 54. The first processor 20 then controls elements of the food-processing module 54 (not shown in Fig. 27) based on the identified food-processing module. Further, the first processor 20 may process and use the additional data of the food-processing module 54. Based on the received identity of the food-processing module 54, and optionally the additional data, the first processor 20 controls the food-processing module 54. It is noted that the kitchen machine 12 and the food-processing module 54 may comprise additional elements, for example, any of the elements described with regard to the aforementioned embodiments.

In another embodiment based on Fig. 27, the food-processing module 54 additionally comprises electrical circuitry for identifying the food-processing module (not shown in Fig. 27), for example, the electrical circuitry described in any of the aforementioned embodiments, and the second processor 78 may derive the identity of the food-processing module 54 from the electrical circuitry and send the identity of the food-processing module 54 via the connector 97 to the first processor 20.

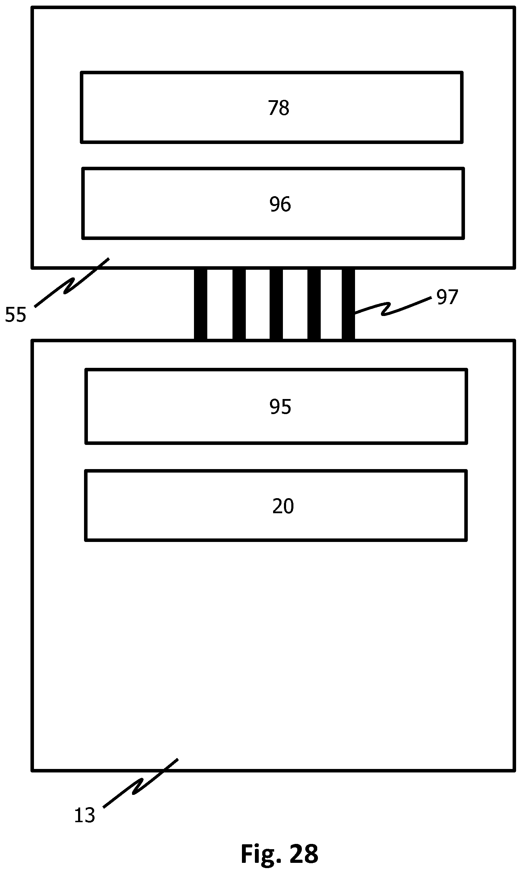

Fig. 28 schematically shows a fourth embodiment of a kitchen machine 13 with a food-processing module 55. The kitchen machine 13 comprises a first processor 20. The kitchen machine 13 and the first processor 20 may be the same as any of the kitchen machines or processors described in the aforementioned embodiments. The food-processing module 55 comprises a second processor 78. When the food-processing module 55 is placed into the kitchen machine 13, the connector 97 provides an electrical connection between the first processor 20 and the second processor 78. Specifically, the kitchen machine 13 powers the second processor 78 via the connector 97 with electrical energy when the food-processing module 55 is placed into the kitchen machine 13. The connector 97 may be any of the connectors described in the aforementioned embodiments.

The fourth embodiment according to Fig. 28 differs from the third embodiment according to Fig. 27 in that a first communication module 95 is provided in the kitchen machine 13 and a second communication module 96 is provided in the food-processing module 55. Accordingly, the identification signal that identifies the food-processing module 55 is not sent via the connector 97 from the second processor 78 to the first processor 20, however, is sent wirelessly (for example, by Bluetooth or WLAN) from the second communication module 96 to the first communication module 95. Additional information regarding the food-processing module 55 (e.g., a production date of the food-processing module 55) may be sent from the second communication module 96 to the first communication module 95.

In another embodiment based on Fig. 28, similar to the other embodiment explained with regard to Fig. 27, the food-processing module 55 may additionally comprise electrical circuitry for identifying the food-processing module (not shown in Fig. 28), for example, the electrical circuitry described in any of the aforementioned embodiments, and the second processor 78 may derive the identity of the food-processing module 55 from the electrical circuitry and send the identity of the food-processing module 54 via the second communication module 96 and the first communication module 95 to the first processor 20.

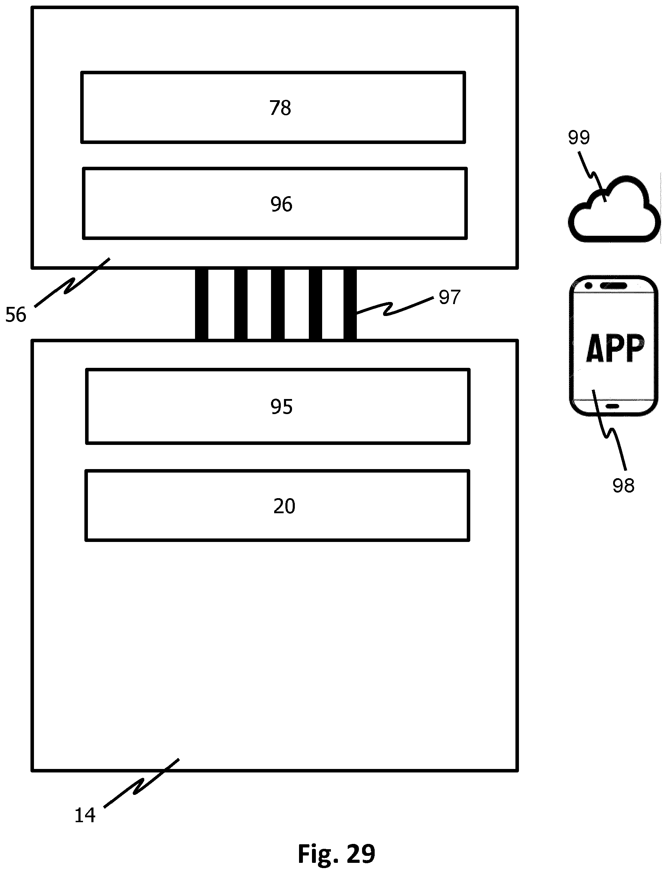

Fig. 29 schematically shows a fifth embodiment of a kitchen machine 14 with a food-processing module 56. The kitchen machine 14 comprises a first processor 20. The kitchen machine 14 and the first processor 20 may be the same as any of the kitchen machines or processors described in the aforementioned embodiments. The food-processing module 56 comprises a second processor 78. When the food-processing module 56 is placed into the kitchen machine 14, the connector 97 provides an electrical connection between the first processor 20 and the second processor 78. Specifically, the kitchen machine 14 powers the second processor 78 via the connector 97 with electrical energy when the food-processing module 56 is placed into the kitchen machine 14. The connector 97 may be any of the connectors described in the aforementioned embodiments.

The fifth embodiment according to Fig. 29 differs from the fourth embodiment according to Fig. 28 in that a mobile device 98 and/or a server 99 is foreseen. The second communication module 96 communicates with the mobile device 98 and/or a server 99. Moreover, the mobile device 98 and/or a server 99 communicates with the first communication module 95.

The second processor 78 sends via the second communication module 96 a unique identification signal to the mobile device 98 or the server 99. The mobile device 98 or the server 99 analyses the received identification signal and determines the identity of the food-processing module 56. The mobile device 98 or the server 99 then sends the identity of the food-processing module 56 via the first communication module 95 to the first processor 20. Similar to the fourth embodiment according to Fig. 28, additional information regarding the food-processing module 56 may be sent to the first processor 20.

Moreover, similar to the third embodiment according to Fig. 27 and the fourth embodiment according to Fig. 28, according to a further embodiment based on Fig. 29, the food-processing module 56 may comprise electrical circuitry for identifying the food-processing module (not shown in Fig. 29), for example, the electrical circuitry described in any of the aforementioned embodiments, and the second processor 78 may derive an identity signal of the food-processing module 56 from the electrical circuitry and send the identity signal of the food-processing module 56 via the second communication module 96 to the mobile device 98 or the server 99. The mobile device 98 or the server 99 analyses the received identity signal and determines the food-processing module 56. The mobile device 98 or the server 99 then sends the identity of the food-processing module 56 via the first communication module 95 to the first processor 20.

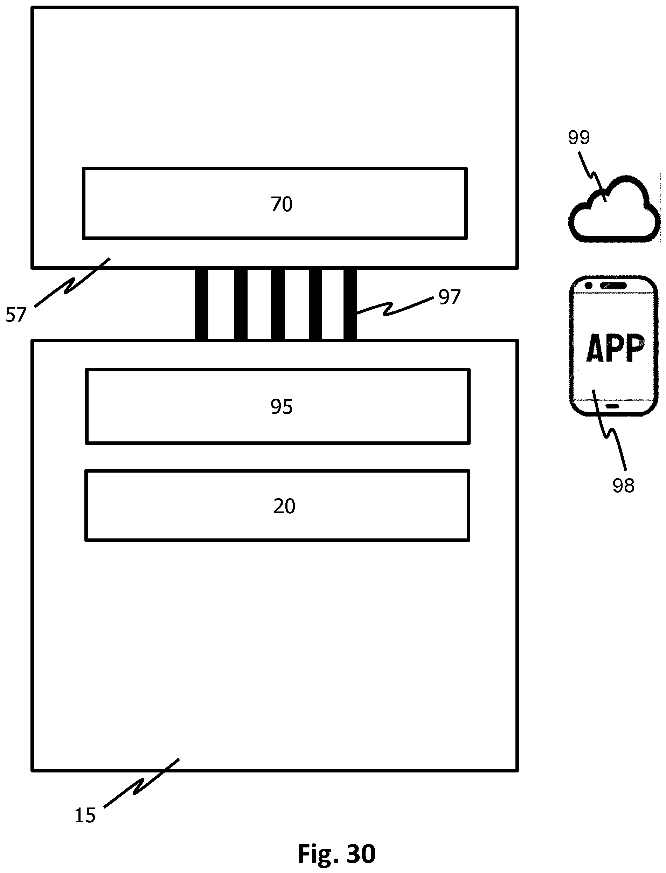

Fig. 30 schematically shows a sixth embodiment of a kitchen machine 15 with a food-processing module 57. The kitchen machine 15 comprises a first processor 20. The kitchen machine 15 and the first processor 20 may be the same as any of the kitchen machines or processors described in the aforementioned embodiments. The food-processing module 57 comprises electrical circuitry 70. The electrical circuitry 70 may be the electrical circuitry described in any of the aforementioned embodiments.

For identifying the food-processing module 57, the first processor 20 sends via connector 97 output signals to the electrical circuitry 70 and receives via connector 97 response signals from the electrical circuitry 70. The output signals and response signals may be the same signals described in any of the aforementioned embodiments including electrical circuitry, e.g., electrical circuitry 70. The first communication module 95 then sends the received response signals to the mobile device 98 or the server 99. The mobile device 98 or the server 99 analyses the received response signals and identifies the food-processing module 57. Thereafter, the mobile device 98 or the server 99 sends the identity of the food-processing module 57 to the first communication module 95, which forwards the identity of the food-processing module 57 to the first processor 20.

Although the present disclosure has been described in detail with reference to exemplary kitchen machines, food-processing modules, connectors and electrical circuitry, it should be understood that various changes, substitutions, and alterations can be made herein without departing from the invention as defined by the appended claims. The scope of the present disclosure is not intended to be limited to the particular kitchen machines, food-processing modules, connectors and electrical circuitry described herein.

## Claims

1. A kitchen machine (10; 11; 12; 13; 14; 15) configured to be operated with and identify a food-processing module (50; 51; 53; 54; 55; 56; 57), the kitchen machine (10; 11; 12; 13; 14; 15) comprising
a processor (20) configured to receive an identification signal from the food-processing module (50; 51; 53; 54; 55; 56; 57), from a mobile device (98) configured to communicate with the food-processing module (50; 51; 53; 54; 55; 56; 57), or from a server (99) configured to communicate with the food-processing module 50; 51; 53; 54; 55; 56; 57.

2. The kitchen machine (10; 11; 12; 13; 14; 15) of claim 1, further comprising a first connector (30) configured to be electrically connected to a second connector (60) of the food-processing module (50; 51; 53; 54; 55; 56; 57), wherein
the processor (20) is electrically connected to the first connector (30) and configured, when the first connector (30) is electrically connected to the second connector (60), to
initiate, during a first time interval (T1o), a sending of a plurality of first output signals via the first connector (30) to the second connector (60),
initiate, during a second time interval (T1i) after the first time interval (T1o), a receiving of the identification signal from the second connector (60) via the first connector (30), the identification signal comprising a plurality of first input signals, and
identify the food-processing module (50; 51; 53; 54; 55; 56; 57) based on the plurality of first input signals.

3. The kitchen machine (10; 11; 12; 13; 14; 15) according to claim 2, wherein the processor (20) is further configured to
initiate, during a third time interval (T2o) after the second time interval (T1i), a sending of a plurality of second output signals via the first connector (30) to the second connector (60), and
initiate, during a fourth time interval (T2i) after the third time interval (T2o), a receiving of a plurality of second input signals from the second connector (60) via the first connector (30).

4. The kitchen machine (10; 11; 12; 13; 14; 15) according to claim 3, wherein the processor (20) is further configured to
initiate, during a fifth time interval (T3o) after the fourth time interval (T2i), a sending of a plurality of third output signals via the first connector (30) to the second connector (60), and
initiate, during a sixth time interval (T3i) after the fifth time interval (T3o), a receiving of a plurality of third input signals from the second connector (60) via the first connector (30).

5. The kitchen machine (10; 11; 12; 13; 14; 15) according to any of claims 2 to 4, wherein
the first connector (30) comprises a plurality of poles (P1, P2, P3, P4), and
the plurality of poles (P1, P2, P3, P4) comprises poles (P1, P2, P3) for each of the output signals and the respective input signals, and a further pole (P4) for a sensor (80) in the food-processing module (50; 51; 53; 54; 55; 56; 57).

6. The kitchen machine (10; 11; 12; 13; 14; 15) according to claim 5, wherein the processor (20) is further configured to
short, during receipt of sensor signals via the second connector (60) and the first connector (30) from the sensor (80), all poles of the plurality of poles (P1, P2, P3, P4).

7. The kitchen machine (10; 11; 12; 13; 14; 15) according to any of claims 2 to 6, wherein
the first connector (30) comprises a Tip Ring Sleeve, TRS, or a Tip Ring Ring Sleeve, TRRS, connector (61), or a socket for a TRS or TRRS; and/or
the first connector (30) comprises a plurality of poles (P1, P2, P3, P4), and the processor (20) is further configured to selectively add, during one of the time intervals (T1o, T1i, T2o, T2i, T3o, T3i), to each of the plurality of poles (P1, P2, P3, P4) a pull-up resistor (R1, R2, R3); and/or
the first connector (30) further comprises two pins separate from the plurality of poles (P1, P2, P3, P4) for supplying power to a heating element (85; 86) in the food-processing module (50; 51; 53; 54; 55; 56; 57).

8. The kitchen machine (10; 11; 12; 13; 14; 15) according to any of claims 2 to 7, wherein the processor (20) is further configured to initiate the identification of the food-processing module (50; 51; 53; 54; 55; 56; 57) when at least one of the following conditions is being met:
the kitchen machine (10; 11; 12; 13; 14; 15) is powered up,
the food-processing module (50; 51; 53; 54; 55; 56; 57) is connected to the kitchen machine (10; 11; 12; 13; 14; 15), and
a user of the kitchen machine (10; 11; 12; 13; 14; 15) starts a user interface (45, 47) of the kitchen machine (10; 11; 12; 13; 14; 15).

9. The kitchen machine (10; 11; 12; 13; 14; 15) according to claim 1, further comprising
a communication module (95) configured to receive the identification signal from the food-processing module (50; 51; 53; 54; 55; 56; 57), the mobile device (98), or the server (99), and forward the identification signal to the processor (20).

10. An identification device for identifying a food-processing module (50; 51; 53; 54; 55; 56; 57), the identification device being configured to output an identification signal to a kitchen machine (10; 11; 12; 13; 14; 15), to a mobile device (98) configured to communicate with the kitchen machine (10; 11; 12; 13; 14; 15), or to a server (99) configured to communicate with the kitchen machine (10; 11; 12; 13; 14; 15).

11. The identification device of claim 10, comprising
a processor (78) configured to output the identification signal for identifying the food-processing module (50; 51; 53; 54; 55; 56; 57); or
electrical circuitry (70; 71) for identifying the food-processing module (50; 51; 53; 54; 55; 56; 57), the electrical circuitry (70; 71) comprising at least one or any combination of the following:
a shorted first pole (P1) of a plurality of poles (P1, P2, P3, P4), a shorted second pole (P2) of the plurality of poles (P1, P2, P3, P4), a shorted third pole (P3) of the plurality of poles (P1, P2, P3, P4), an electrical connection of two of the plurality of poles (P1, P2, P3) with a Schottky diode in a first forward direction, a connection of two of the plurality of poles (P1, P2, P3, P4) with a Schottky diode in a second forward direction opposite the first forward direction, a connection of a first pole and a second pole of the plurality of poles (P1, P2, P3) with a resistor, a connection of a second pole and a third pole of the plurality of poles (P1, P2, P3) with a resistor, a connection of two of the plurality of poles (P1, P2, P3) with a transistor, and no electrical connection between two of the plurality of poles (P1, P2, P3, P4).

12. A food-processing module (50; 51; 53; 54; 55; 56; 57) comprising the identification device of claim 10 or 11.

13. The food-processing module (50; 51; 53; 54; 55; 56; 57) of claim 12, further comprising
a second connector (60) configured to be electrically connected to a first connector (30) of the kitchen machine (10; 11; 12; 13; 14; 15), wherein
the electrical circuitry (70; 71) is connected to the second connector (60) and configured to output the identification signal via the second connector (60) to the first connector (30) when being applied with input signals from the first connector (30) via the second connector (60), wherein the identification signal comprises unique output signals.

14. The food-processing module (50; 51; 53; 54; 55; 56; 57) of claim 12 or 13, further comprising
a sensor (80), wherein
the second connector (60) comprises a plurality of poles (P1, P2, P3, P4), and
the plurality of poles (P1, P2, P3, P4) comprises poles (P1, P2, P3) for each of the input signals and the respective output signals, and a further pole (P4) for the sensor (80); and/or
a heating element (85; 86), wherein
the second connector (60) comprises two pins for supplying power to a heating element (85; 86).

15. A processing device, the processing device being a mobile device (98) or a server (99), and being configured to receive an input signal from a food-processing module (50; 51; 53; 54; 55; 56; 57) or a kitchen machine (10; 11; 12; 13; 14; 15), process the input signal in order to identify the food-processing module (50; 51; 53; 54; 55; 56; 57), and send an identification signal to the kitchen machine (10; 11; 12; 13; 14; 15).

## Amended claims

### Amended claims in accordance with Rule 137(2) EPC.

1. A kitchen machine (10; 11; 12; 13; 14; 15) configured to be operated with and identify a food-processing module (50; 51; 53; 54; 55; 56; 57), the kitchen machine (10; 11; 12; 13; 14; 15) comprising
a processor (20) configured to receive an identification signal from the food-processing module (50; 51; 53; 54; 55; 56; 57), and
a first connector (30) configured to be electrically connected to a second connector (60) of the food-processing module (50; 51; 53; 54; 55; 56; 57), wherein
the processor (20) is electrically connected to the first connector (30) and configured, when the first connector (30) is electrically connected to the second connector (60), to
initiate, during a first time interval (T1o), a sending of a plurality of first output signals via the first connector (30) to the second connector (60),
initiate, during a second time interval (T1i) after the first time interval (T1o), a receiving of the identification signal from the second connector (60) via the first connector (30), the identification signal comprising a plurality of first input signals, and
identify the food-processing module (50; 51; 53; 54; 55; 56; 57) based on the plurality of first input signals.

2. The kitchen machine (10; 11; 12; 13; 14; 15) according to claim 1, wherein the processor (20) is further configured to
initiate, during a third time interval (T2o) after the second time interval (T1i), a sending of a plurality of second output signals via the first connector (30) to the second connector (60), and
initiate, during a fourth time interval (T2i) after the third time interval (T2o), a receiving of a plurality of second input signals from the second connector (60) via the first connector (30).

3. The kitchen machine (10; 11; 12; 13; 14; 15) according to claim 2, wherein the processor (20) is further configured to
initiate, during a fifth time interval (T3o) after the fourth time interval (T2i), a sending of a plurality of third output signals via the first connector (30) to the second connector (60), and
initiate, during a sixth time interval (T3i) after the fifth time interval (T3o), a receiving of a plurality of third input signals from the second connector (60) via the first connector (30).

4. The kitchen machine (10; 11; 12; 13; 14; 15) according to any of claims 1 to 3, wherein
the first connector (30) comprises a plurality of poles (P1, P2, P3, P4), and
the plurality of poles (P1, P2, P3, P4) comprises poles (P1, P2, P3) for each of the output signals and the respective input signals, and a further pole (P4) for a sensor (80) in the food-processing module (50; 51; 53; 54; 55; 56; 57).

5. The kitchen machine (10; 11; 12; 13; 14; 15) according to claim 4, wherein the processor (20) is further configured to
short, during receipt of sensor signals via the second connector (60) and the first connector (30) from the sensor (80), all poles of the plurality of poles (P1, P2, P3, P4).

6. The kitchen machine (10; 11; 12; 13; 14; 15) according to any of claims 1 to 5, wherein
the first connector (30) comprises a Tip Ring Sleeve, TRS, or a Tip Ring Ring Sleeve, TRRS, connector (61), or a socket for a TRS or TRRS; and/or
the first connector (30) comprises a plurality of poles (P1, P2, P3, P4), and the processor (20) is further configured to selectively add, during one of the time intervals (T1o, T1i, T2o, T2i, T3o, T3i), to each of the plurality of poles (P1, P2, P3, P4) a pull-up resistor (R1, R2, R3); and/or
the first connector (30) further comprises two pins separate from the plurality of poles (P1, P2, P3, P4) for supplying power to a heating element (85; 86) in the food-processing module (50; 51; 53; 54; 55; 56; 57).

7. The kitchen machine (10; 11; 12; 13; 14; 15) according to any of claims 1 to 6, wherein the processor (20) is further configured to initiate the identification of the food-processing module (50; 51; 53; 54; 55; 56; 57) when at least one of the following conditions is being met:
the kitchen machine (10; 11; 12; 13; 14; 15) is powered up,
the food-processing module (50; 51; 53; 54; 55; 56; 57) is connected to the kitchen machine (10; 11; 12; 13; 14; 15), and
a user of the kitchen machine (10; 11; 12; 13; 14; 15) starts a user interface (45, 47) of the kitchen machine (10; 11; 12; 13; 14; 15).

8. An identification device for identifying a food-processing module (50; 51; 53; 54; 55; 56; 57), the identification device being configured to output via a hard-wired connection an identification signal to a kitchen machine (10; 11; 12; 13; 14; 15), the identification device being configured to send an identification signal to a processor (78) in the identification device, wherein the processor (78) is configured to derive the identity of the food-processing module based on the identification signal, or the identification device being configured to send an identification signal to a processor (78) in the identification device, wherein the processor (78) is configured to send the identification signal via a communication module (96) in the identification device to a mobile device (98) or a server (99),
the identification device comprising
electrical circuitry (70; 71) for identifying the food-processing module (50; 51; 53; 54; 55; 56; 57) and being configured to generate the identification signal when being applied with input signals, the electrical circuitry (70; 71) comprising at least one or any combination of the following:
a shorted first pole (P1) of a plurality of poles (P1, P2, P3, P4), a shorted second pole (P2) of the plurality of poles (P1, P2, P3, P4), a shorted third pole (P3) of the plurality of poles (P1, P2, P3, P4), an electrical connection of two of the plurality of poles (P1, P2, P3) with a Schottky diode in a first forward direction, a connection of two of the plurality of poles (P1, P2, P3, P4) with a Schottky diode in a second forward direction opposite the first forward direction, a connection of a first pole and a second pole of the plurality of poles (P1, P2, P3) with a resistor, a connection of a second pole and a third pole of the plurality of poles (P1, P2, P3) with a resistor, a connection of two of the plurality of poles (P1, P2, P3) with a transistor, and no electrical connection between two of the plurality of poles (P1, P2, P3, P4).

9. A food-processing module (50; 51; 53; 54; 55; 56; 57) comprising the identification device of claim 8.

10. The food-processing module (50; 51; 53; 54; 55; 56; 57) of claim 9, further comprising
a second connector (60) configured to be electrically connected to a first connector (30) of the kitchen machine (10; 11; 12; 13; 14; 15), wherein
the electrical circuitry (70; 71) is connected to the second connector (60) and configured to output the identification signal via the second connector (60) to the first connector (30) when being applied with input signals from the first connector (30) via the second connector (60), wherein the identification signal comprises unique output signals.

11. The food-processing module (50; 51; 53; 54; 55; 56; 57) of claim 9 or 10, further comprising
a sensor (80), wherein
the second connector (60) comprises a plurality of poles (P1, P2, P3, P4), and
the plurality of poles (P1, P2, P3, P4) comprises poles (P1, P2, P3) for each of the input signals and the respective output signals, and a further pole (P4) for the sensor (80); and/or
a heating element (85; 86), wherein
the second connector (60) comprises two pins for supplying power to a heating element (85; 86).
